# EUROPEAN PATENT SPECIFICATION

(11) **EP 0 502 673 B1**
(45) Date of publication and mention of the grant of the patent: **27.11.1996**
(21) Application number: 92301756.0
(22) Date of filing: 02.03.1992
(51) Int. Cl.: H04N 5/073

(54) **Video signal switching apparatus**
Videosignalumschaltgerät
Appareil de commutation de signaux vidéo

(30) Priority: 04.03.1991 JP 37233/91
(43) Date of publication of application: 09.09.1992
(73) Proprietor: MATSUSHITA ELECTRIC INDUSTRIAL CO., LTD., Kadoma-shi, Osaka 571 (JP)
(72) Inventor: Okamoto, Ichiro, Kohoku-ku, Yokohama-shi (JP); Kawamoto, Sigeharu, Midori-ku, Yokohama-shi (JP)
(74) Representative: Votier, Sidney David

(56) References cited:
- GB-A- 2 152 321
- US-A- 4 231 063
- IEEE INTERNATIONAL CONFERENCE ON COMMUNICATIONS - ICC '90; CONFERENCE RECORD vol. 3, April 1990, ATLANTA, GA, USA pages 1064 - 1068; KUBOTA ET AL: 'HIGH- QUALITY FRAME-SYNCHRONIZATION AND ENCRYPTION FOR SATELLITE VIDEO SIGNAL TRANSMISSION'
- PATENT ABSTRACTS OF JAPAN vol. 6, no. 243 (E-145)2 December 1982 & JP-A-57 142 076

## Description

### BACKGROUND OF THE INVENTION

### 1. Field of the Invention

The present invention relates to a video signal switching apparatus which makes a selection out of a plurality of inputted video signals to output the resultant signal and which is suitable for application to video switchers, video mixers and frame synchronizers.

### 2. Description of the Prior Art

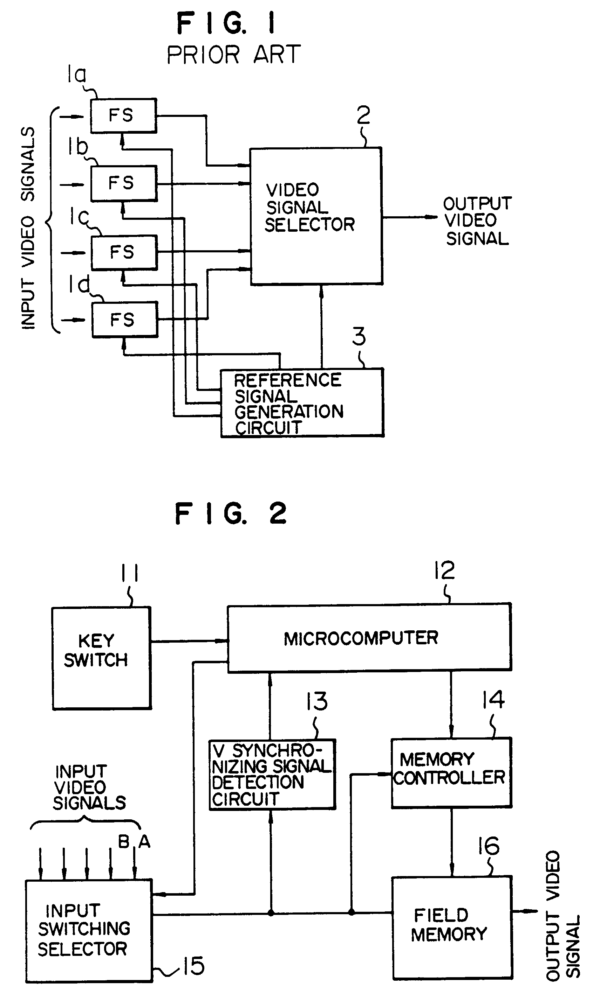

Fig. 1 shows a video signal switching apparatus of the prior art.

In Fig. 1, 1a, 1b, 1c and 1d denote frame synchronizers (hereafter abbreviated to FS) for attaining synchronization. Numeral 2 denotes a video signal selector unit, and numeral 3 denotes a reference signal generation circuit.

In case this video signal switching apparatus makes a selection out of input video signals which are asynchronous each other such as video signals supplied from VTRs, it is necessary to prevent disturbance of images caused by the fact that at the moment of switching the output video signal cannot synchronize with the output video signal before the switching. Therefore, respective input video signals are inputted to FSs 1a, 1b, 1c and 1d, where all input video signals are synchronized with a reference signal inputted from the reference signal generation circuit 3, and then those input video signals are switched in the video signal selector unit.

Even in a conventional video signal switching apparatus, it is thus possible to switch input video signals without disturbing the image.

In the above described conventional video signal switching apparatus, however, it is necessary to provide FSs 1a, 1b, 1c and 1d for respective input video signals. In case the number of input video signals is large, therefore, the cost of the apparatus mounts up, resulting in a problem.

US-A-4 231 063 describes a frame synchronizer for a television receiver in which the incoming television signal is digitised and stored in a memory. Upon detection of a first television signal being switched to a second television signal, which is not synchronized with the first, the writing of the television signal into the memory is immediately inhibited until the start of a complete frame of the second television signal.

In an article by S. Kubota et al., entitled "High-Quality Frame-Synchronization and Encryption for Satellite Video Signal Transmission" (IEEE International Conference of Communications - ICC'90, Conference Record, vol. 3, April 1990, Atlanta, U.S.A., pages 1064 - 1068), there is described a frame-synchronizer for video signal switching, wherein, upon detection of the switching of an incoming video signal, the frame currently being received is inhibited from the output, and the preceding frame is output instead, giving rise to a "freezing" of the preceding frame.

In each of the above two systems, the switching of the incoming television signal appears to be detected automatically by characteristics of the incoming video signal.

### SUMMARY OF THE INVENTION

The present invention aims at solving the above described problem. An object of the present invention is to provide an excellent video signal switching apparatus capable of switching a plurality of input video signals without causing synchronization disturbance in the output video signal and with a reduced cost.

In order to achieve the above described object, there is provided a video signal switching apparatus as defined by Claim 1.

By using the above described configuration, the present invention has the following function. That is to say, input video signal switching is performed in a vertical blanking interval after the field of the input video signal now being written has terminated. Simultaneously therewith, writing signals into the storage means is inhibited during one field. During this time, horizontal and vertical synchronizing signals of the input video signals of the switching side are locked. Thereafter, writing signals into the storage means is started in the next blanking interval of the input video signal of the switching side. Thus there is prevented synchronization disturbance of the output video signal read out from the storage means when switching from an input video signal to another input video signal is performed.

### BRIEF DESCRIPTION OF THE DRAWINGS

Fig. 1 is a block diagram showing the configuration of a video signal switching apparatus of the prior art;
Fig. 2 is a block diagram showing the configuration of an embodiment of a video signal switching apparatus according to the present invention; and
Fig. 3 is a flow chart showing the operation procedure in the embodiment of Fig. 2.

### DESCRIPTION OF THE PREFERRED EMBODIMENTS

The configuration of an embodiment of the present invention will hereafter be described by referring to drawings.

In Fig. 2, numeral 11 denotes a key switch for video switching directive and numeral 12 denotes a microcomputer for timing control. Further, numeral 13 denotes a vertical (V) synchronizing signal detection circuit and numeral 14 denotes a memory controller for writing signals into a memory. Numeral 15 denotes an input switching selector for actually switching input video signals and numeral 16 denotes a field memory for storing images of one field.

Operation of the above described configuration will now be described.

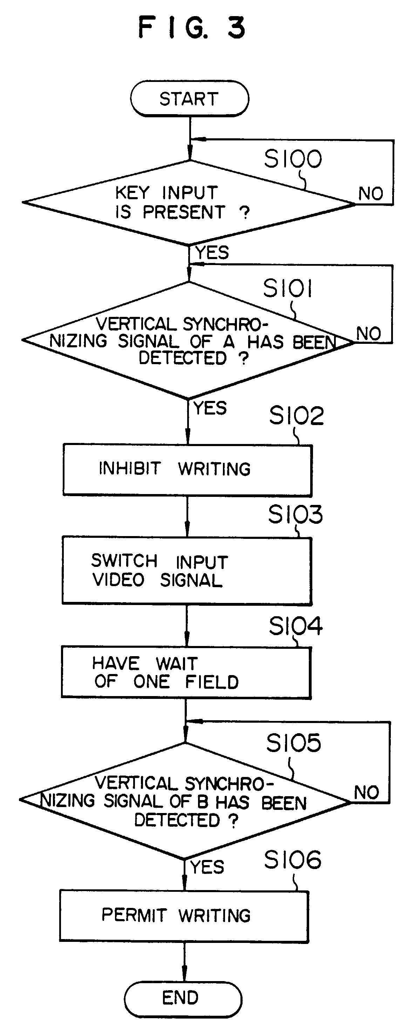

Fig. 3 shows a flow chart corresponding to the switching procedure of the input video signal. In this case, an input video signal A has been inputted and the key switch 11 is depressed to perform switching to an input video signal B. This switching is performed under the control of the microcomputer 12.

The microcomputer 12 detects the input from the key switch 11. In case the answer is "no", i.e., in case the input cannot be detected, return is made to wait this detection (step (S) 100). In case the input is detected, i.e., in case the answer is "yes", the processing proceeds to the next step.

It is then determined whether the V synchronizing signal of the input video signal A has been detected in the V synchronizing signal detection circuit 13 (step 101). This aims at preventing mixed existence of the old image and the new image on the field memory 16.

If the V synchronizing signal is detected, i.e., if the answer is "yes" at the step 101, writing signals into the field memory 16 is immediately inhibited (step 102). And then switching to the input video signal B is performed in the input switching selector 15 under the control of the microcomputer 12 (step 103). If the V synchronizing signal is not detected, i.e., if the answer is "no" at the step 101, this step 101 is repeated to wait detection of the V synchronizing signal there.

Thereafter, a wait is had until the memory writing clock in the memory controller 14 is locked to the horizontal synchronizing signal of the input video signal B (step 104). In the present embodiment, a wait of one field is had.

During this time, the same image is repeatedly read out as the output video signal, resulting in a still image for a moment. Since the still image continues for only approximately one to two fields, however, it is hardly noticed by human eyes.

In order to write the input video signal B from the head of a field, it is then determined whether the V synchronizing signal has been detected in the V synchronizing signal detection circuit 13 (step 105). If the answer is "yes" indicating that the V synchronizing signal has been detected, a directive is supplied to the memory controller to permit writing signals into the memory (step 106). If the answer is "no" indicating that the V synchronizing signal has not been detected, this step is repeated to wait detection of the V synchronizing signal.

In this way, signals are stably written into the field memory 16 for an effective video interval. Therefore, the output video signal read out from the field memory 16 is switched from the input video signal A to the input video signal B without being disturbed in synchronization.

Although the field memory 16 has been used in the above described embodiment, a frame memory can also be used in the same way.

Even if a plurality of asynchronous input video signals are switched at every possible timing and outputted, synchronization is thus attained and images are not disturbed.

In case a plurality of VTRs are subject to mixing, for example, therefore, it becomes unnecessary to provide FSs on the outside, resulting in a reduced cost.

Further, if the present invention is applied to a switcher for switching a plurality of video cameras on-line, signals can be inputted while they are still asynchronous without performing genlock connection. As a result, the connection becomes simple and troublesome phase adjustment also becomes unnecessary.

## Claims

1. A video signal switching apparatus comprising:
switching directive detection means (11) for detecting an input video signal switching directive;
switching selector means (15) for switching input video signals;
vertical synchronizing signal detection means (13) for detecting a vertical synchronizing signal formed in a new input video signal switched by said switching selector means;
storage means (16) for inputting and outputting input video signals asynchronously switched by said switching means; and
control means (14) for controlling a write operation of said storage means, said control means being effective, in response to a detected switching directive, to inhibit writing signals into said storage means and simultaneously to switch input video signals in accordance with said directive in a vertical blanking interval after termination of the writing of a field of an input video signal and simultaneously to lock the horizontal and vertical synchronizing signals of the new input video signal, said control means being effective to write the new input video signal into said storage means in the next blanking interval.

2. A video signal switching apparatus according to Claim 1, wherein the writing inhibition time of said storage means (16) at the time of input video signal switching is so set as to be between one and two fields.

3. A video signal switching apparatus according to Claim 1 or Claim 2, wherein said storage means (16) comprises a field memory.

4. A video signal switching apparatus according to Claim 1 or Claim 2, wherein said storage means (16) comprises a frame memory.

## Patentansprüche

1. Videosignal-Schaltvorrichtung aufweisend:
eine Schaltanweisungs-Erfassungseinrichtung (11) zum Erfassen einer Eingangsvideosignal-Schaltanweisung;
eine Schaltwahleinrichtung (15) zum Schalten von Eingangsvideosignalen;
eine Vertikalsynchronisiersignal-Erfassungseinrichtung (13) zum Erfassen eines Vertikalsynchronisiersignals, das in einem neuen Eingangsvideosignal ausgebildet ist, welches durch die Schaltwahleinrichtung geschaltet ist;
eine Speichereinrichtung (16) zum Eingeben und Ausgeben von Eingangsvideosignalen, die durch die Schalteinrichtung asynchron geschaltet sind; und
eine Steuereinrichtung (14) zum Steuern einer Schreiboperation der Speichereinrichtung, wobei die Steuereinrichtung bewerkstelligt, reagierend auf eine erfaßte Schaltanweisung das Schreiben von Signalen in die Speichereinrichtung zu sperren und gleichzeitig Eingangsvideosignale in Übereinstimmung mit der Anweisung in einem Vertikalaustast-Intervall nach Beendigung des Schreibens eines Halbbildes eines Eingangsvideosignals zu schalten und gleichzeitig die horizontalen und vertikalen Synchronisiersignale des neuen Eingangsvideosignals zu verriegeln, und die Steuereinrichtung bewerkstelligt, im nächsten Austastungsintervall das neue Eingangsvideosignal in die Speichereinrichtung zu schreiben.

2. Videosignal-Schaltvorrichtung nach Anspruch 1, bei der die Schreibsperrzeit der Speichereinrichtung (16) zum Zeitpunkt des Schaltens des Eingangsvideosignals so festgelegt ist, daß sie zwischen einem und zwei Halbbildern beträgt.

3. Videosignal-Schaltvorrichtung nach Anspruch 1 oder 2, bei der die Speichereinrichtung (16) einen Halbbildspeicher aufweist.

4. Videosignal-Schaltvorrichtung nach Anspruch 1 oder 2, bei der die Speichereinrichtung (16) einen Vollbildspeicher aufweist.

## Revendications

1. Dispositif de commutation de signaux vidéo comprenant:
des moyens de détection d'instruction de commutation (11), destinés à détecter une instruction de commutation d'un signal vidéo d'entrée;
des moyens formant sélecteur de commutation (15) destinés à commuter des signaux vidéo d'entrée;
des moyens de détection de signaux de synchronisation de trames (13) destinés à détecter un signal de synchronisation de trames, formé dans un nouveau signal vidéo d'entrée résultant d'une commutation effectuée par lesdits moyens formant sélecteur de commutation;
des moyens de mémorisation (16) destinés à admettre et à délivrer des signaux vidéo d'entrée, résultant d'une commutation asynchrone effectuée par lesdits moyens de commutation; et
des moyens de commande (14) destinés à commander une opération d'écriture desdits moyens de mémorisation, lesdits moyens de commande intervenant, en réponse à une instruction de commutation détectée, pour interdire l'écriture de signaux dans lesdits moyens de mémorisation et simultanément pour commuter des signaux vidéo d'entrée, conformément à ladite instruction, dans un intervalle de suppression de trame, une fois l'écriture d'une trame d'un signal vidéo d'entrée terminée, et simultanément pour verrouiller les signaux de synchronisation des lignes et des trames du nouveau signal vidéo d'entrée, lesdits moyens de commande intervenant pour écrire le nouveau signal vidéo d'entrée dans lesdits moyens de mémorisation au cours de l'intervalle de suppression suivant.

2. Dispositif de commutation de signaux vidéo selon la revendication 1, dans lequel le temps d'interdiction d'écriture desdits moyens de mémorisation (16), à l'instant où le signal vidéo d'entrée est commuté, est réglé pour se situer entre une et deux trames.

3. Dispositif de commutation de signaux vidéo selon la revendication 1 ou la revendication 2, dans lequel lesdits moyens de mémorisation (16) comprennent une mémoire de trames.

4. Dispositif de commutation de signaux vidéo selon la revendication 1 ou la revendication 2, dans lequel lesdits moyens de mémorisation (16) comprennent une mémoire d'images.
